(19) Europäisches Patentamt
European Patent Office
Office européen des brevets

(11) Publication number: 0 360 102 A1

(12) # EUROPEAN PATENT APPLICATION

(21) Application number: 89116692.8

(22) Date of filing: 09.09.89

(51) Int. Cl.5: C08K 5/524 , C08K 5/349 , C08L 57/08

(30) Priority: 15.09.88 US 244952

(43) Date of publication of application: 28.03.90 Bulletin 90/13

(84) Designated Contracting States: BE DE FR GB IT SE

(71) Applicant: AUSIMONT USA, INC.
44 Whippany Road
Morristown New Jersey 07960(US)

Applicant: AMERICAN TELEPHONE AND TELEGRAPH COMPANY
550 Madison Avenue
New York, NY 10022(US)

(72) Inventor: Garg, Brijendra K.
6 Joseph Lane
Succasanna, N.J. 07876(US)
Inventor: Robertson, Arthur Bruce
81 Harris Road
Princeton, N.J. 08540(US)
Inventor: Sheperd, Lloyd
61 Samson Avenue
Madison, N.J. 07940(US)
Inventor: Moore, Warren F.
Apt. D-18 4732 S. 94 Plaza
Omaha Nebraska 68127(US)
Inventor: Mottine, John J., Jr.
15692 Jackson Drive
Omaha Nebraska 68118(US)

(74) Representative: LOUIS, PÖHLAU, LOHRENTZ & SEGETH
Kesslerplatz 1 Postfach 3055
D-8500 Nürnberg-1(DE)

(54) **Improved stabilized halopolymer compositions.**

(57) A stabilized melt-processable composition comprising a halopolymer and preferably from about 0.01 wt.% to about 10 wt.% of the halopolymer of a combination comprising a phenolic complex and a phosphite. The phenolic complex is of the formula:

EP 0 360 102 A1

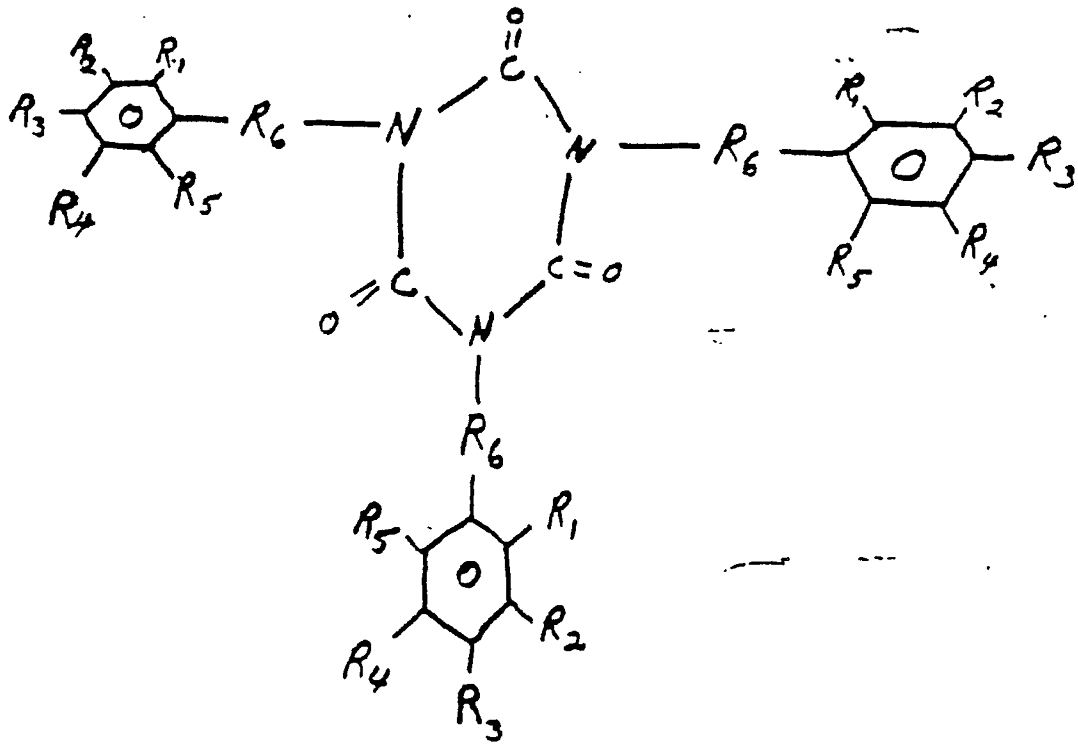

where at least one $R_1$, $R_2$, $R_3$, $R_4$, and $R_5$ is --OH, and wherein the remaining $R_1$ through $R_5$ is hydrogen or an aliphatic hydrocarbon. $R_8$ is an alkylene group having from 1 to 10 carbon atoms. The phosphite is of the formula $P(OR)_3$, wherein R is hydrogen or an alkyl, cycloalkyl, aralkyl, aryl, or a hydroxy-substituted alkyl group having from 1 to about 18 carbon atoms.

In a preferred embodiment, the composition further includes from about 0.01 wt.% to about 10 wt.% of a thioester. A preferred halopolymer is an ethylene/chlorotrifluoroethylene copolymer.

# IMPROVED STABILIZED HALOPOLYMER COMPOSITIONS

This invention relates to improved stabilized, melt-processable halopolymer compositions. More particularly, this invention relates to a stabilized, melt-processable halopolymer composition which is stabilized against degradation and bubble formation during fabrication and during use at elevated temperatures. Most particularly, this invention relates to stabilized, melt-processable ethylene/chlorotrifluoroethylene copolymer compositions.

Ethylene/chlorotrifluoroethylene copolymers exhibit outstanding mechanical, electrical and chemical properties at high temperatures. For example, ethylene/chlorotrifluoroethylene copolymers resist attack of most organic solvents at ambient as well as elevated temperatures, being only slightly soluble at 100° - 150°C, in 2,5-dichlorobenzotrifluoride/benzonitrile or O-dichloro-benzene mixtures of 10:90 to 50:50 volume ratio. They are insoluble in bases and acids, including fuming nitric acid. These copolymers also possess high tensile strength and have melting points above about 200°C, and as high as about 260°C., which melting points are higher than those of the homopolymers of either ethylene (as high as 130°C) or chlororotrifluoroethylene (as high as 215°C). Ethylene/chlorotrifluoroethylene copolymers also have outstanding electrical properties. For all of these advantageous properties, they are suitable for making useful articles, such as valves, gaskets, pipes, wire and cable insulation, sheets or films for use in applications where their excellent mechanical, electrical and chemical properties can be used to advantage. Ethylene/chlorotrifluoroethylene copolymers, due to their high melting points in excess of about 220°C, require melt fabrication temperatures of above 250°C, usually within the range of between about 260°C to 320°C. At these high temperatures, an initial bubble formation and degradation of the polymer occurs, resulting in loss of chemical, mechanical and electrical properties. In particular, loss of these properties occurs during extrusion wire coating, causing high scrap rates in the process.

U.S. Patent Nos. 3,745,145; 3,773,698, 4,496,677, and 4,539,354 disclose various ethylene/chlorotrifluoroethylene copolymer compositions which are stabilized against thermal degradation. Generally, the thermal stabilizing systems for these copolymers comprise a phosphite of an organic phenol, a salt of a carboxylic acid and a metal of Group II of the Periodic Table, and a thiodipropionic acid ester or alkali metal salt. This stabilizing system is satisfactory for most melt fabricating techniques used to process ethylene/chlorotrifluoroethylene copolymer compositions. However, there are various melt fabricating processes such as high speed extrusion coating of conductors for telephone wire, where the temperature, residence time and shearing of the material in the process are more severe than encountered in most melt fabricating techniques. A particular problem in such a process is the formation of bubbles in the molten polymer. The formation of bubbles in the polymer composition is a result of volatilization of any additive or additives or degradation products upon heating the composition, and/or reaction products of the polymer and the additives, which are formed upon heating of the composition. Such bubbles are believed to cause spark failures, cone breaks, reduced mechanical properties, and other processing and quality problems. Therefore, it is desirable to have an improved stabilization system for halopolymers such as ethylene/chlorotrifluoroethylene to protect against bubble formation during high speed extrusion.

Applicants have discovered that the omission of a salt of a carboxylic acid and a metal of Group II of the Periodic Table from a stabilized halopolymer composition provides for an effectively stabilized melt-processable composition while also providing for a less volatile composition, said lower volatility being manifested in the formation of less bubbles in the composition, thus resulting in less cone breaks and spark failures.

In accordance with an aspect of the present invention, there is provided a composition comprising a halopolymer and an effective stabilizing amount of a combination comprised of both (a) a phenolic complex and a phosphite. The phenolic complex is of the formula:

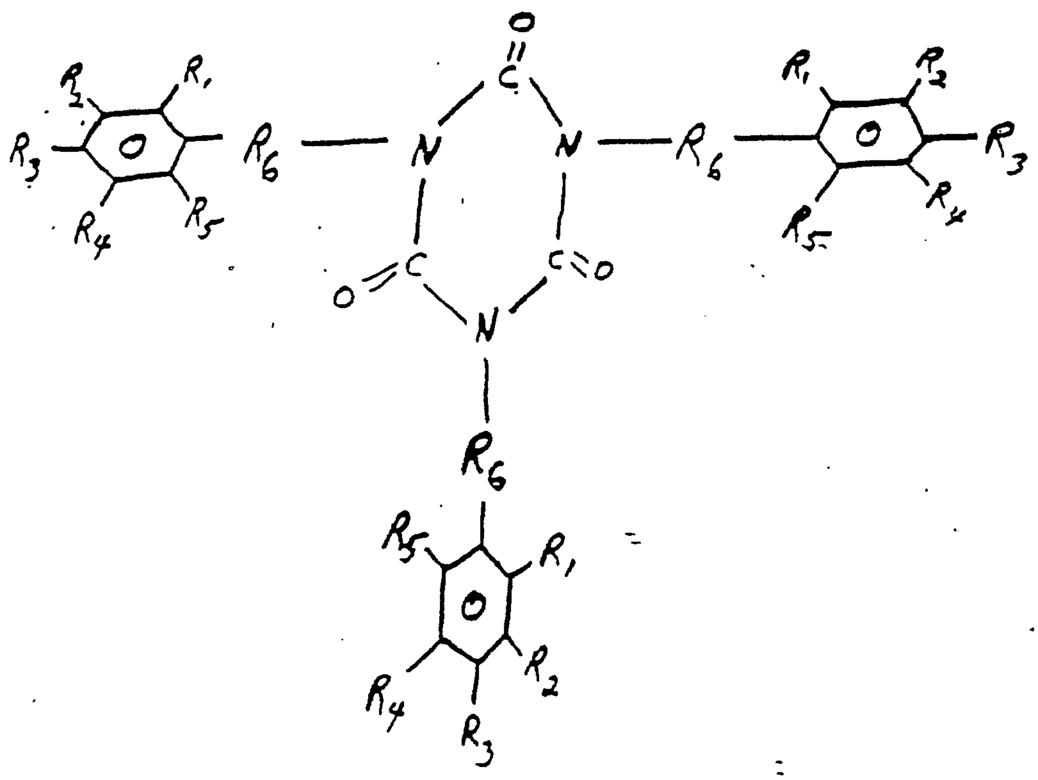

wherein at least one of $R_1$, $R_2$, $R_3$, $R_4$ and $R_5$ is —OH, and wherein the remaining $R_1$ through $R_5$ (i.e., those that are not —OH) is hydrogen or an aliphatic hydrocarbon, preferably a saturated aliphatic hydrocarbon. In a preferred embodiment, the saturated aliphatic hydrocarbon has from 1 to 10 carbon atoms, preferably from 1 to 5 carbon atoms. Each of $R_1$ through $R_5$ in the respective aromatic groups may be the same or different, provided at least one of $R_1$ through $R_5$ is --OH. In general, each aromatic constituent contains no more than two --OH groups.

$R_6$ is an alkylene group having from 1 to 10 carbon atoms, preferably from 1 to 5 carbon atoms. In a most preferred embodiment, at least one of the remaining $R_1$ through $R_5$ (i.e., those that are not --OH) is a tert-butyl group.

One most preferred embodiment of the phenolic complex is of the formula:

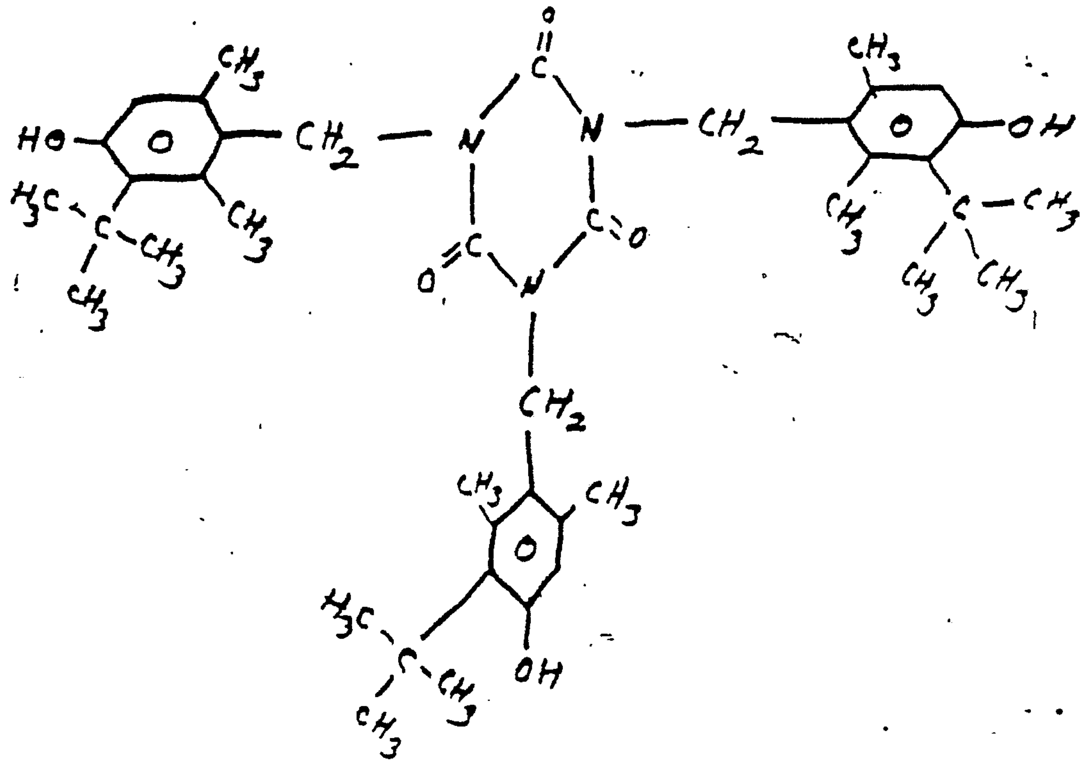

Another most preferred embodiment of the phenolic complex is of the formula:

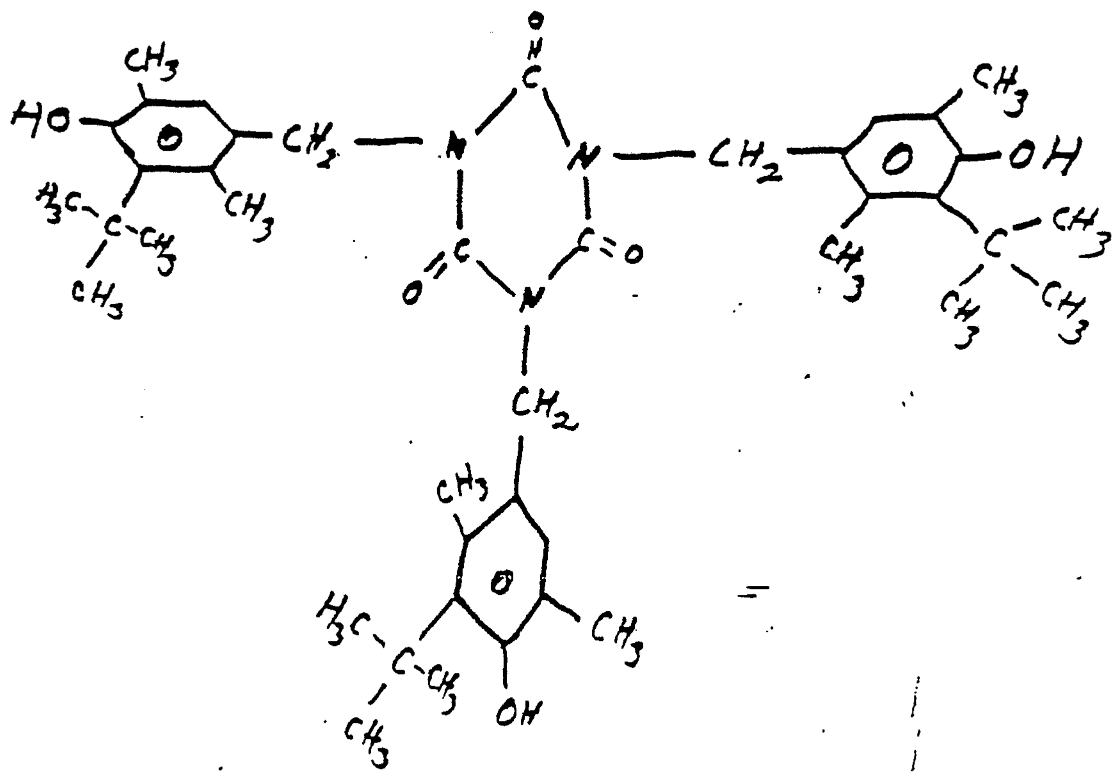

The phosphite is of the formula P $(OR)_3$, wherein R is hydrogen or an alkyl, cycloalkyl, aralkyl, aryl, or a hydroxy substituted alkyl group having from 1 to about 18 carbon atoms.

Preferably, the R group of the phosphite is of the formula:

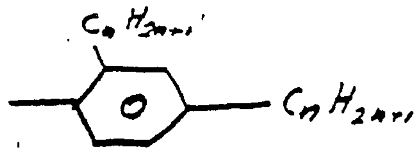

wherein n is from 1 to about 9. Most preferably, the phosphite is tris (2, 4 -di-tert-butyl-phenyl) phosphite.

The combination of the phenolic complex and the phosphite preferably is present in an amount of from about 0.01 wt.% to about 10 wt.% of the weight of said halopolymer. More preferably, each of the phenolic complex and the phosphite is present in an amount of of from about 0.003 wt.% to about 7 wt.% of the weight of the halopolymer. Most preferably, the phenolic complex is present in an amount of from about 0.004 wt.% to about 4.5 wt.% of the weight of the halopolymer, an the phosphite is present in an amount of from about 0.0055 wt.% to about 6 wt.% of the weight of the halopolymer.

In a most preferred embodiment, the composition may further comprise an effective stabilizing amount of a thioester. The thioester preferably is present in an amount of from about 0.01 wt.% to about 10 wt.% of the halopolymer. In a preferred embodiment, the halopolymer is an ethylene/chlorotrifluoroethylene copolymer. The ethylene/chlorotrifluoroethylene copolymer may contain from about 40 mole % to about 60 mole % ethylene, and from about 40 mole % to about 60 mole % of chlorotrifluoroethylene, preferably about 50 mole % ethylene and about 50 mole % chlorotrifluoroethylene.

The thioester may be of the formula:

$R_1OOCCH_2CH_2 - S - CH_2CH_2COOR_2$,

wherein $R_1$ and $R_2$ may be the same or different, and are selected from the group consisting of hydrogen, alkali metals, straight chain or branched chain alkyl radicals having from 1 to 36 carbon atoms, cycloalkyl radicals having from 3 to 36 carbon atoms, alkenyl radicals having from 6 to 36 carbon atoms, aryl radicals, and alkylaryl radicals, with the proviso that not more than one of $R_1$ and $R_2$ may by hydrogen. The thioester may be distearylthiodipropionate.

Alternatively, the thioester may be of the formula:

$$C -- (R_2 - O - \overset{\overset{O}{/\!/}}{C} - R_1 - S - R_3)_x,$$

wherein $R_1$ is an alkyl group having from 1 to about 10 carbon atoms, and $R_2$ and $R_3$ each are alkyl groups having from 1 to about 50 carbon atoms, preferably from 1 to about 20 carbon atoms, and x is from 1 to 4. The thioester may be pentaerythritol tetrakis (B-laurylthiopropionate).

In a preferred embodiment, the combination of said phenolic complex and said phosphite is present in an amount of from 0.15 wt.% to 0.6 wt.%, most preferably at about 0.3 wt.%, based on the weight of said halopolymer.

In another preferred embodiment, the thioester is present in an amount of from about 0.075 wt.% to about 0.3 wt.%, most preferably at about 0.15 wt.%, based on the weight of said halopolymer.

Applicants' invention is also directed to a wire or cable coated with the above-identified stabilized halopolymer composition.

The stabilized halopolymer compositions of the present invention are resistant to the formation of bubbles in the polymer melt during extrusion at temperatures greater than 275°C, and have good melt stability. The stabilizers employed in the present invention possess a lower volatility and thus are less likely to form gases upon heating and to cause bubbles which in turn may cause cone breaks in the extruded polymer composition. The stabilized halopolymer compositions of the present invention, by being melt stable, also are resistant to crosslinking of the halopolymer polymer chains.

As stated above, a preferred halopolymer is an ethylene/chlorotriluoroethylene copolymer.

The copolymers of ethylene and chlorotrifluoroethylene, which may be used in the composition of the present invention, are high molecular weight, normally solid, thermoplastic polymers containing from 40 to 60 mole percent of ethylene units in the molecule, and correspondingly 60 to 40 mole percent chlorotrifluorethylene units. The melt index is preferably from about 1 to about 50, more preferably from 0.5 to 30, and most preferably from 1.0 to 25 grams/10 minutes. The melt index is measured in accordance with modified ASTM Test No. 1238, run at 275°C, under a piston load of 2160 grams. The copolymer has a melting point from about 200°C to about 265°C. The processing temperatures are generally in the range from 240°C to 320°C, and preferably 260°C to 300°C.

The stabilizing compositions in accordance with the present invention are particularly advantageous for use in ethylene/chlorotrifluoroethylene copolymers and having melting points above about 220°C.

These copolymers may be prepared by processes known to those skilled in the art, as described, for

example, in Hanford U.S. Pat. No. 2,392,378, which shows copolymerization of ethylene with chlorotrifluoroethylene in a stirred aqueous medium at superatmospheric pressure using benzoyl peroxide as catalyst; in NUCLEONICS, September, 1964, pp. 72-74, disclosing formation of a high melting (237°C) 1:1 alternating copolymer of ethylene and chlorotrifluoroethylene prepared using a radiation at 0°C; or British Pat. No. 949,422, showing bulk copolymerization of ethylene with chlorotrifluorethylene at temperatures between -80° to + 50°C, using oxygen-activated alkylboron catalyst; or Ragazzini et al. U.S. Pat. Nos. 3,371,076 and 3,501,446, respectively, relating to methods for making ethylene/chlorotrifluoroethylene copolymers using oxygen-activated boron-containing catalysts and to products obtained by that process. About equimolar ethylene/chlorotrifluoroethylene copolymers having melting point above 200°C can also be prepared by batchwise bulk copolymerization of the monomers at temperatures of about 0°C, say between about -20 to +20°C, at superatmospheric pressure in an agitator-equipped pressure vessel by charging the vessel with liquid chlorotrifluoroethylene monomer and bubbling gaseous ethylene into this monomer, using organic peroxide-type initiators, such as trichloroacetyl peroxide and, if desired, adding small amounts of chain transfer agents, such as chloroform or heptane. The desired copolymer product is obtained as a dispersion in the monomer.

The copolymer can contain nominal amounts of comonomers other than ethylene and chlorotrifluoroethylene, including propylene, isobutylene, vinyl fluoride, hexafluoropropylene, tetrafluoroethylene, vinylidene fluoride, perfluoro-vinyl ether, acrylic acid and alkyl ester, methacrylic acid and alkyl ester, perfluoro alkyl ethylene, etc.

In a preferred embodiment, the combination of the phenolic complex and the phosphite is a blend of a hindered phenol antioxidant either of formula A:

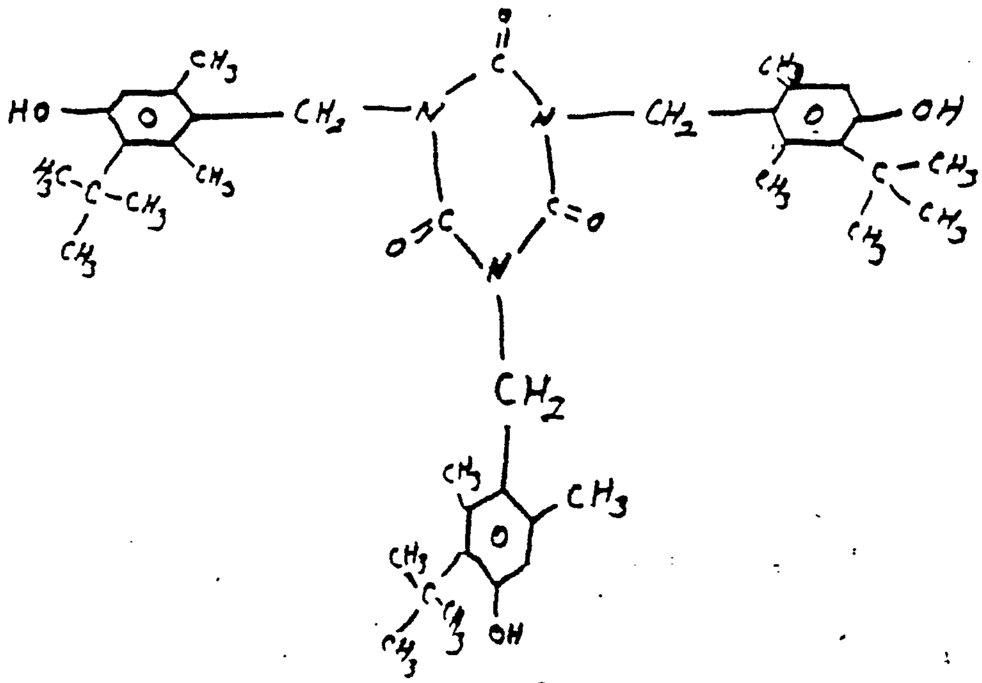

or Formula B:

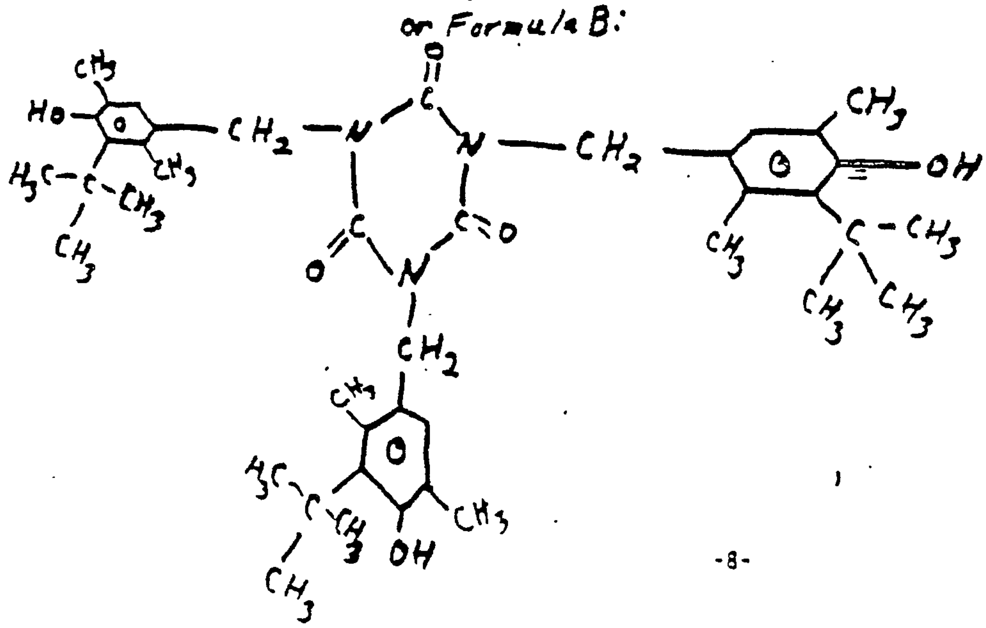

-8-

and tris (2, 4-di-tert-butyl-phenyl) phosphite, which is of the formula:

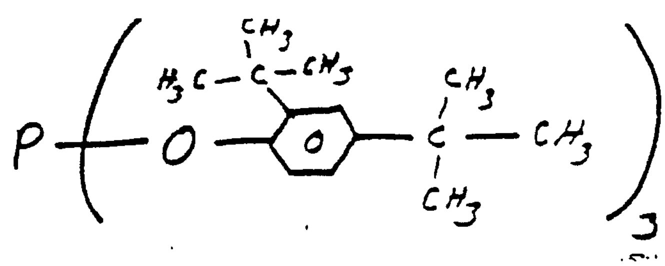

A specific embodiment of this blend is known as Mark 5111, sold by the Argus Division of Witco Corporation, 633 Court Street, Brooklyn, NY. Mark 5111 is an off-white powder having a melting point of

from about 130°C to about 171°C, a density of from about 1.03 to about 1.07 g/cc, and comparatively low volatility when heated to 305°C. Thermogravimetric analysis showed that Mark 5111 had a weight loss of 17% when heated to 305°C at 10°C/min in an argon stream. Mark 5111 is further described in Argus Product Data, Mark 5111 Antioxidant, published by Argus Division, Witco Corporation.

A first preferred thioester which may be used in accordance with the present invention is distearylthiodipropionate, also known as DSTDP. A preferred DSTDP composition is sold by the Argus Division of Witco Corporation. It is a white flake composition having a set point of 64°C, and a density of 0.985. Thermogravimetric analysis showed that this product had a weight loss of 2.6% when heated to 305°C at 10°C/min. in an argon stream. Distearylthiodipropionate is of the formula:

$$S-[CH_2-CH_2-\overset{O}{\overset{\|}{C}}-O-C_{18}H_{37}]_2$$

A second preferred thioester is pentaerythritol tetrakis (B-lauryl-thiopropionate), which is of the formula:

$$(C_{12}H_{25}SCH_2CH_2\overset{O}{\overset{\|}{C}}OCH_2)_4C$$

This thioester has a CAS Registry No. of 29598-76-3. A preferred embodiment of pentaerythritol tetrakis (B-laurylthiopropionate) is Seenox 412S, a product of Argus Division, Witco Corporation. This product has a melting point of 47°C, a molecular weight of 1,162, and a specific gravity at 55°C of 0.93. Thermogravimetric analysis shows this product to have a weight loss of 3.1% when heated to 305°C at 10°C/min. in an argon stream.

As stated above, the combination of the phenolic complex and the phosphite is preferably present in an amount of from about 0.01 wt.% to about 10 wt.% of the weight of the halopolymer, more preferably from about 0.15 wt.% to about 0.6 wt.%, and most preferably at about 0.3 wt.%. The thioester is preferably present in amount of from about 0.01 wt.% to about 10 wt.% of the halopolymer, more preferably from about 0.075 wt.% to about 0.3 wt.%, and most preferably at about 0.15 wt.%. In a most preferred embodiment, the stabilized halopolymer composition comprises an ethylene/chlorotrifluoroethylene copolymer, 0.3 wt.% of the ethylene/chlorotrifluoroethylene copolymer of a blend of a hindered phenol antioxidant, the structure of which is hereinabove described, and tris (2, 4-di-tert-butyl-phenyl) phosphite, and 0.15 wt.% of distearylthiodipropionate.

The invention will now be described with respect to the following examples; however, the scope of the invention is not intended to be limited thereby.

## Examples 1-10

For the following Examples, an ethylene/chlorotrifluoroethylene copolymer powder having from 49 mole % to 51 mole % ethylene and 49 mole % to 51 mole % chlorotrifluoroethylene, manufactured and sold by Ausimont, U.S.A., Inc. as HALAR 5041, having a specific gravity of 1.68 and a melt index (M.I.) of 16.0 to 22.0g/10 minutes (measured according to ASTM D-1238 and ASTM D-3275 at 275°C, under a piston load of 2160g) was mixed with varying amounts of Stabilizers 1, 2, 3, or 4, said stabilizers being added in weight percentage amounts based on the weight of HALAR 5041, and said stabilizers with the exception of Stabilizer 1, being in powdered form, whereas Stabilizer 1 is in the form of a liquid. The weight percentages of each stabilizer added for each example is shown in Table 1. In all examples which follow, Stabilizer 1 is a tranesterification reaction product of an organic polyhydric phenol and a phosphite ester, and a salt of a monocarboxylic acid having from 6 to about 24 carbon atoms and a Group II metal, said Stabilizer 1 being known as Mark 158, a product of Argus Division, Witco Corporation, and more fully described in U.S. Patent No. 3,244,650. Stabilizer 2 is a distearylthiodipropionate (DSTDP) product as described above (Argus Division, Witco Corporation). Stabilizer 3 is Mark 5111, and Stabilizer 4 is Seenox 412S as described above.

For each example, 5 pounds of HALAR 5041 is mixed with the respective stabilizers for each example in a Hobart mixer Model A-200 (Hobart Manufacturing Company,Troy, Ohio), for 45 minutes at room temperature in order to form a homogeneous mixture. The mixture is then pelletized by feeding the mixture to a 1" Haake single screw extruder Model 257 (Haake Buchler Instruments, Inc., Saddle Brook, N.J.) with Zone 1, Zone 2, Zone 3, Zone 4, and die of said extruder being operated at 225°C, 245°C, 265°C, 275°C, and 275°C respectively. The resulting strand from the 1/8" die of the extruder for each example was cooled in a water trough, air dried, and pelletized using a Killion Model 6676 pellitizer (Killion Extruder, Inc., Verona, N.J.). Dry, uniform sized pellets for each example were saved for further testing and analysis.

For determing thermal stability and propensity for bubble formation for the compositions of each example in the melt phase, a 7 gram sample of each pelletized composition was run on a melt index device in the manner described in ASTM D-1238 and ASTM D-3275 at a load of 2,160 g for 1 hour at 275°C and

also for 30 min. at 305° C. The extrudates were examined for change in melt index (MI) and for existence of bubbles. The change in melt index was recorded as melt stability defined as follows:

$$\text{Melt stability \%} = 100 \times \frac{\text{original M.I.} - \text{M.I after heating}}{\text{original M.I.}}$$

The materials were then allowed to equilibrate in the melt indexer for 10 minutes at the test temperature and then extruded. The extrudates were then examined by slicing thin sections of the strands, and then photographing the cross-sections of extrudates through a microscope at 30X magnification. The number of bubbles for each cross-section is visually counted. The bubble rating is as follows:
0-3 bubbles Excellent
4-10 bubbles Good
>10 bubbles Unacceptable
Melt stability and bubble rating results are listed in Table 1 below.

Table 1

| Example | Stabilizer (wt. %) | | | | M.I. Conditions Temp-time °C-min. | Melt Stability % | Bubble Rating after 10 min. |
|---|---|---|---|---|---|---|---|
| | 1 | 2 | 3 | 4 | | | |
| 1 (Comparative) | .3 | .15 | --- | --- | 275-60 | .6 | Excellent |
| 2 (Comparative) | .6 | .3 | --- | --- | 275-60 | -2.3 | Excellent |
| 3 (Comparative) | .15 | .075 | --- | --- | 275-60 | 4.8 | Excellent |
| 4 (Comparative) | --- | --- | --- | --- | 275-60 | 21.0 | Excellent |
| 5 | --- | --- | .6 | .3 | 275-60 | 5.1 | Excellent |
| 6 | --- | --- | .3 | .15 | 275-60 | 7.2 | Excellent |
| 7 | --- | --- | .15 | .075 | 275-60 | 15.5 | Excellent |
| 8 | --- | .3 | .6 | --- | 275-60 | 10.0 | Excellent |
| 9 | --- | .15 | .3 | --- | 275-60 | 15.3 | Excellent |
| 10 | --- | .075 | .15 | --- | 275-60 | 18.0 | Excellent |
| 1 (Comparative) | .3 | .15 | --- | --- | 305-30 | 1.3 | Unacceptable |
| 2 (Comparative) | .6 | .3 | --- | --- | 305-30 | 2.5 | Unacceptable |
| 3 (Comparative) | .15 | .075 | --- | --- | 305-30 | 6.5 | Good |
| 4 (Comparative) | --- | --- | --- | --- | 305-30 | 69.0 | Excellent |
| 5 | --- | --- | .6 | .3 | 305-30 | 19.4 | Excellent |
| 6 | --- | --- | .3 | .15 | 305-30 | 21.4 | Excellent |
| 7 | --- | --- | .15 | .075 | 305-30 | 22.0 | Excellent |
| 8 | --- | .3 | .6 | --- | 305-30 | 15.8 | Excellent |
| 9 | --- | .15 | .3 | --- | 305-30 | 16.9 | Excellent |
| 10 | --- | .075 | .15 | --- | 305-30 | 21.5 | Excellent |
| Resin used is HALAR 5041 (Unstabilized ethylene/chlorotrifluoroethylene copolymer, Ausimont, U.S.A.,Inc.) | | | | | | | |

The stabilized compositions of Examples 5-10 have the desired properties of good melt stabilities and near absence of bubbles at 305° C. In contrast, although the compositions of Examples 1 and 2 show good melt stability, they demonstrate unacceptable bubble formation. The unstabilized ethylene/chlorotrifluorethylene composition (Example 4) showed a poor melt stability although it had an excellent bubble rating. The colors of the pellets derived from the melt index test strands were inspected. Although the colors varied from white to tan, they were considered acceptable in all cases.

Examples 11-14

Varying amounts of Stabilizers 1, 2, or 3 were added to HALAR 5041 copolymer according to the procedures described above. The compositions were then tested for melt stability and for bubble formation as described above. The results are listed below in Table 2.

Table 2

| Example | Stabilizer wt.% | | | MI Temp-Time °C-min | Melt Stability % | Bubble Rating after 10 min. |
|---|---|---|---|---|---|---|
| | 1 | 2 | 3 | | | |
| 11 (Comparative) | .3 | .15 | --- | 305-30 | 1.3 | Unacceptable |
| 12 (Comparative) | --- | --- | --- | 305-30 | 69.0 | Excellent |
| 13 | .3 | .31 | .32 | 305-30 | -2.3 | Unacceptable |
| 14 | .37 | .34 | .32 | 305-30 | -1.5 | Unacceptable |
| Resin employed is HALAR 5041 (Unstabilized ethylene/chlorotrifluoroethylene copolymer, Ausimont, U.S.A., Inc.) | | | | | | |

The above results indicate that the addition of Stabilizers 1, 2, and 3 to ethylene/chlorotrifluoroethylene copolymer improved melt stability, but did not reduce bubble formation in a high temperature melt.

Examples 15-17

Compositions of ethylene/chlorotrifluoroethylene copolymers (HALAR 5041) and Stabilizers 1, 2, 3, or 4, were made whereby said stabilizers were added in weight percentages based on the weight of the ethylene/chlorotrifluoroethylene copolymer which were the same as those in Examples 1, 3, and 9, respectively. For each of Examples 15-17, 125 lbs. of HALAR 5041 was mixed with a proportionate amount of Stabilizers 1, 2, 3, or 4, so that each ethylene/chlorotrifluoroethylene composition contained the same weight percentage of Stabilizers 1, 2, 3, or 4 as shown in Examples 1, 3 and 9, respectively. The compositions in these Examples were blended using a 150 lb. ribbon blender, then extruded, and then pelletized using a 3 1/2" single screw extruder equipped with an underwater pelletizer. The scale-up to pelletization using larger equipment, as described above, was accomplished without a need for major readjustments in processing parameters.

The samples were tested for melting point (°C), melt index at 275°C, melt stability (%) after being heated at 275°C for 1 hr., and for contamination. The results are listed below in Table 3.

Table 3

| Example | Composition according to previous example | Melting Point, °C | Melt Index at 275°C | Melt Stability after 275°C 1 hr. | Contamination |
|---|---|---|---|---|---|
| 15* | 1 | 240 | 19 | 3 | Minor |
| 16* | 3 | 241 | 19 | 4 | Minor |
| 17 | 9 | 240 | 20 | 5 | Minor |

* Comparatives.

The above results indicate that the compositions of stabilized ethylene/chlorotrifluorethylene copolymer may be prepared on any type of polymer blending and pelletizing equipment including production scale equipment.

Larger quantities of the materials made according to Examples 15-17 were then evaluated on a high speed wire line. This extrusion line is capable of coating wire as speeds of 2500 ft./min. Temperature profiles that were necessary to extrude the materials are summarized in Table 4 below.

Table 4

| Extruder Zone | Ex. 15 | Temperature Profile, °F | |
|---|---|---|---|
| | | Ex. 16 | Ex. 17 |
| Zone 1 | 505 | 510 | 512 |
| Zone 2 | 510 | 519 | 521 |
| Zone 3 | 514 | 529 | 530 |
| Zone 4 | 553 | 540 | 539 |
| Flange | 529 | 530 | 530 |
| Throat | 428 | 464 | 474 |
| X-Head | 552 | 539 | 474 |
| Die | 552 | 542 | 540 |
| Tip | 571 | 544 | 542 |
| Melt | 549 | 514 | 524 |
| Line speed, ft./min | 1370 | 1540 | 2300 |

The purge material of Example 15 was cloudy in appearance and produced extensive white fumes. There were frequent cone breaks and spark failures. In order to achieve a steady-state coating condition, the temperatures of Zone 4 and of the cross-head had to be raised and the line speed lowered.

The purge material of Example 16 was also cloudy and produced white fumes, although not as severe as those produced by Example 15. There was also a reduction in cone breaks and spark failures.

The purge material of Example 17 was totally transparent, and a melt stream did not produce any noticeable fumes. The cone held steady and there was a reduced tendency of the material to break. The number of spark failures was moderate. The line speed could be raised to 2,300+ ft./min. and zone temperatures could be lowered.

The stabilized ethylene/chlorotrifluoroethylene copolymer compositions of Examples 15, 16, and 17 were then used as insulation on 24AWG copper conductors. Insulated wires were converted to 25 pair telephone cables jacketed with a standard ethylene/chlorotrifluorethylene copolymer (HALAR 920, Ausimont, U.S.A., Inc.) The cables were then tested for flame and smoke characteristics in accordance with Underwriters' Laboratories UL910 test method. The results are listed below in Table 5.

Table 5

| | | UL 910 Test Data | | |
|---|---|---|---|---|
| Example | | Flame Spread (Feet) | Peak Smoke | Optical Density, (Average) |
| 15 (Comparative) | Test 1 | 3.0 | .143 | .069 |
| | Test 2 | 2.0 | .152 | .071 |
| 16 (Comparative) | Test 1 | 2.5 | .129 | .066 |
| | Test 2 | 2.5 | .134 | .070 |
| 17 | Test 1 | 2.5 | .119 | .057 |
| | Test 2 | 3.0 | .124 | .055 |
| Passing requirements are a flame spread no greater than 5 feet, Peak Smoke no greater than 0.5, and an optical density no greater than 0.15. | | | | |

Although all of the stabilized ethylene/chlorotrifluoroethylene copolymer compositions passed the UL910 tests, the composition of Example 17 evolved the lowest amount of peak smoke and average smoke.

The stabilized halopolymer compositions of the present invention are advantageous in that they provide a combination of optimum thermal stability and near absence of bubble formation in a high temperature

melt. Thus, the compositions of the present invention are less likely to form cone breaks and be responsible for spark failures when used to coat wires and cables, thus resulting in lower scrap rates of these materials when used in a high speed extrusion wire coating process.

It is to be understood, however, that the scope of the present invention is not to be limited to the specific embodiments described above. The invention may be practiced other than as particularly described and still be within the scope of the accompanying claims.

## Claims

1. A composition, comprising:
a halopolymer; and
an effective stabilizing amount of a combination comprising (a) a phenolic complex of the formula:

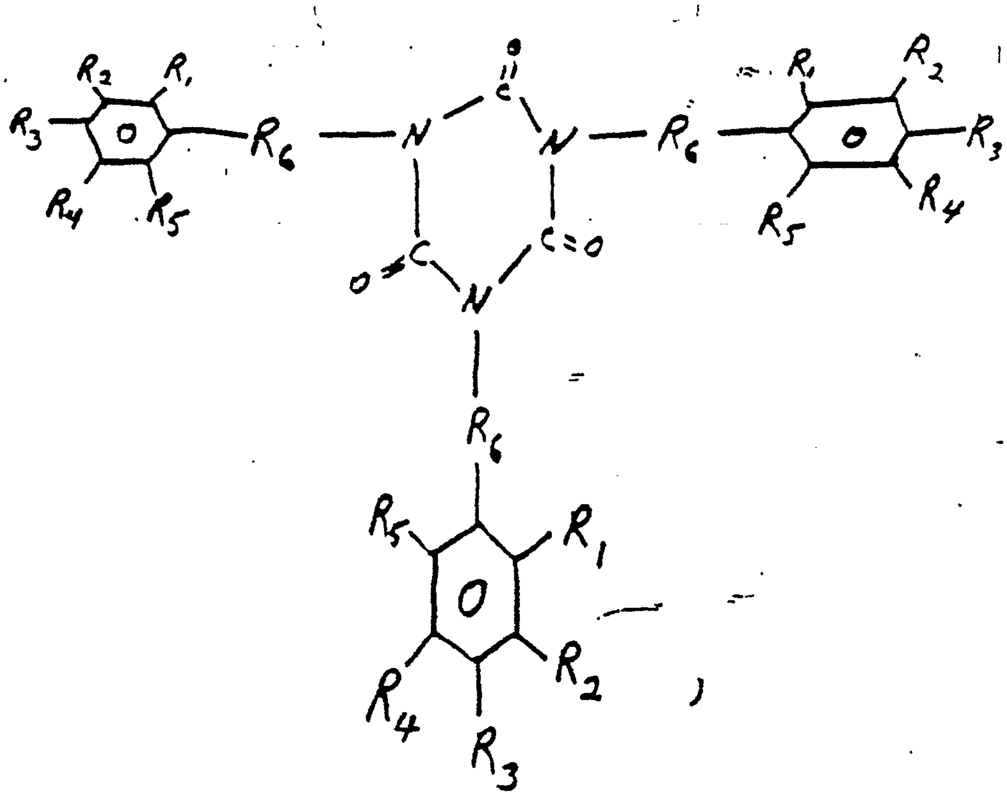

wherein at least one of said $R_1$, $R_2$, $R_3$, $R_4$ and $R_5$ is—OH, and wherein the remaining $R_1$ through $R_5$ is hydrogen or an aliphatic hydrocarbon, and wherein each of $R_1$ through $R_5$ may be the same or different provided that at least one of $R_1$ through $R_5$ is—OH, and $R_6$ is an alkylene group having from 1 to about 10 carbon atoms, and
(b) a phosphite of the formula $P(OR)_3$, wherein R is hydrogen or an alkyl, cycloalkyl, aralkyl, aryl, or a hydroxy-substituted alkyl group having from 1 to about 18 carbon atoms.

2. The composition of Claim 1 wherein said aliphatic hydrocarbon is a saturated hydrocarbon.

3. The composition of Claim 2 wherein said saturated hydrocarbon has from 1 to about 10 carbon atoms.

4. The composition of Claim 3 wherein said saturated hydrocarbon has from 1 to 5 carbon atoms.

5. The composition of Claim 4 wherein at least one of said remaining $R_1$ through $R_5$ is a tert-butyl group.

6. The composition of Claim 5 wherein $R_6$ is an alkylene group having from 1 to 5 carbon atoms.

7. The composition of Claim 6 wherein said phenolic complex is of the formula:

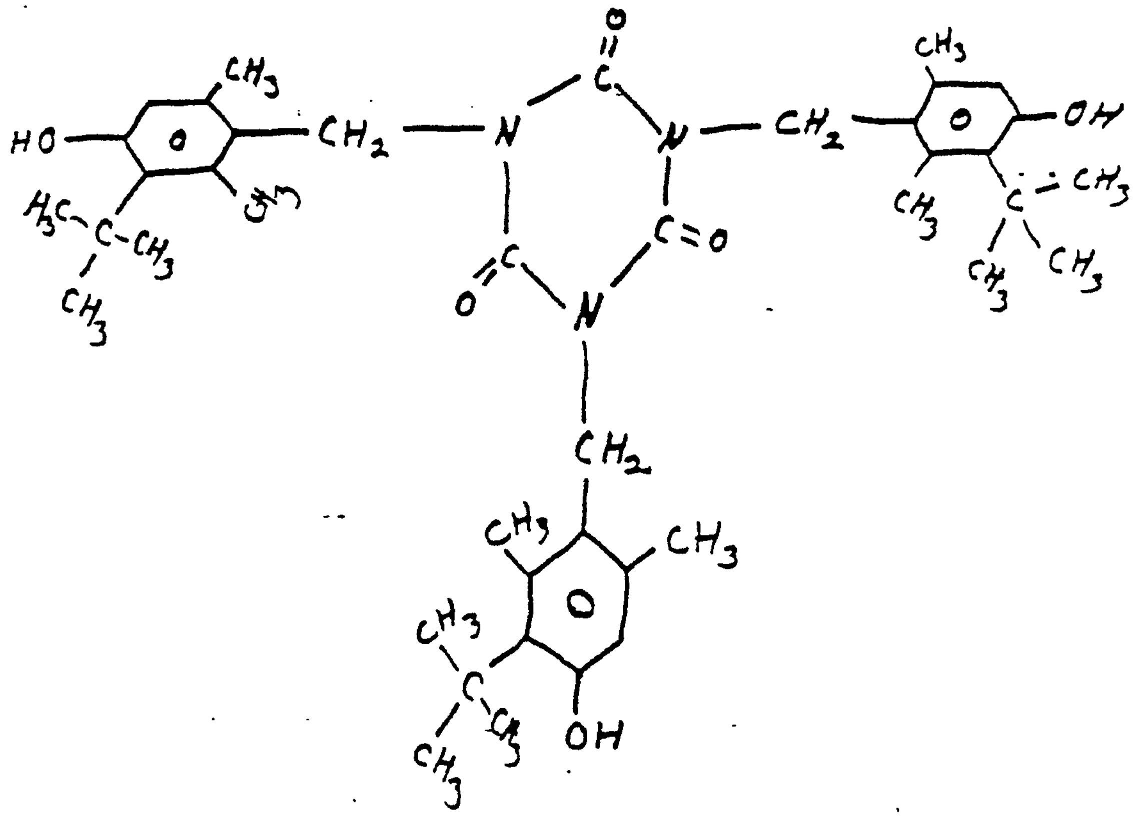

8. The composition of Claim 6 wherein said phenolic complex is of the formula:

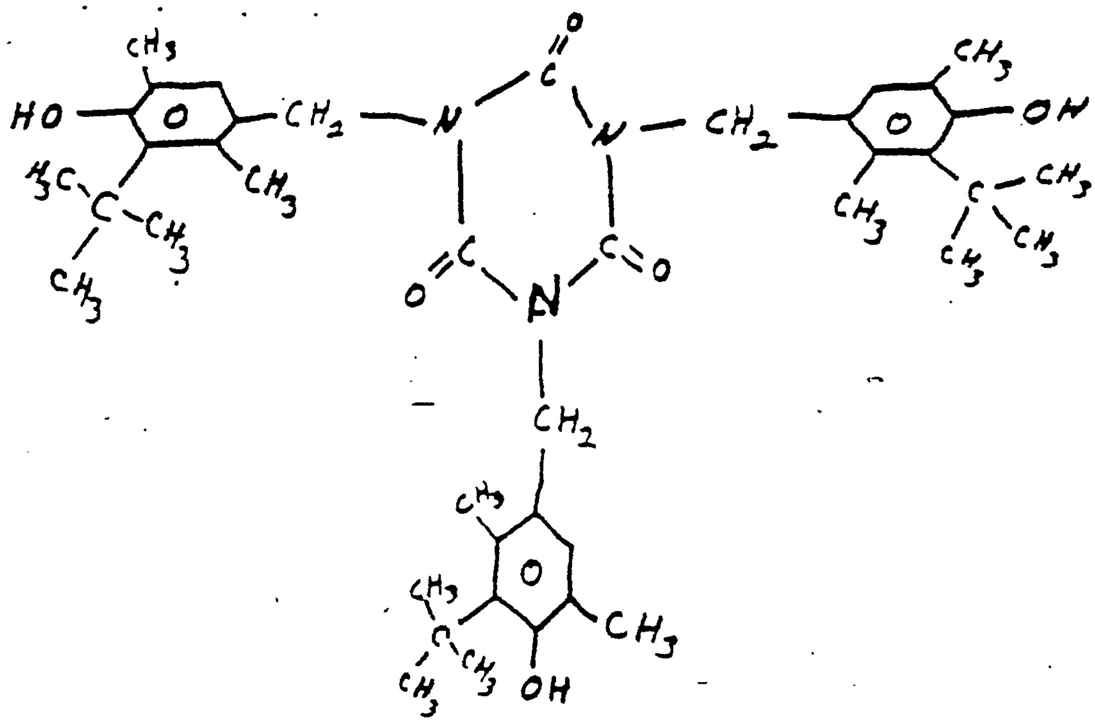

9. The composition of Claim 1 where said phosphite is of the formula P--$(OR)_3$, wherein R is of the formula:

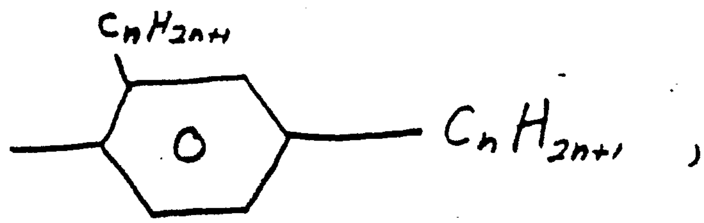

where n is from 1 to about 9.

10. The composition of Claim 9 wherein said phosphite is tris (2, 4-di-tert-butyl-phenyl) phosphite.

11. The composition of Claim 1 wherein said combination comprising said phenolic complex and said phosphite is present in an amount of from about 0.01 wt.% to about 10 wt.% of said halopolymer.

12. The composition of Claim 1, and further comprising:
(c) an effective stabilizing amount of a thioester.

13. The composition of Claim 12 wherein said thioester is present in an amount of from about 0.01 wt.% to about 10 wt.% of said halopolymer.

14. The composition of Claim 1 wherein said halopolymer is an ethylene/chlorotrifluorethylene copolymer.

15. The composition of Claim 14 wherein said ethylene/chlorotrifluoroethylene copolymer contains from about 40 mole% to about 60 mole% of ethylene, and from about 40 mole% to about 60 mole% of chlorotrifluoroethylene.

16. The composition of Claim 15 wherein said ethylene/chlorotrifluoroethylene copolymer contains about 50 mole% of ethylene, and about 50 mole% of chlorotrifluoroethylene.

17. The composition of Claim 12 wherein said thioester is of the formula:
$R_1OOCCH_2CH_2 - S - CH_2CH_2COOR_2$,
wherein $R_1$ and $R_2$ may be the same or different, and are selected from the group consisting of hydrogen, alkali metals, straight chain or branched chain alkyl radicals having from 1 to 36 carbon atoms, alkenyl radicals having from 6 to 36 carbon atoms, aryl radicals and alkylaryl radicals, with the proviso that not more than one of $R_1$ and $R_2$ may be hydrogen.

18. The composition of Claim 17 wherein said thioester is distearylthiodipropionate.

19. The composition of Claim 12 wherein said thioester is of the formula:

$$C - - - (R_2 - O - \overset{O}{\overset{//}{C}} - R_1 - S - R_3)_x,$$

wherein $R_1$ is an alkyl group having from 1 to about 10 carbon atoms, and $R_2$ and $R_3$ each are alkyl groups having from 1 to about 50 carbon atoms, and x is from 1 to 4.

20. The composition of Claim 19 wherein $R_2$ and $R_3$ are alkyl groups having from 1 to 20 carbon atoms.

21. The composition of Claim 20 wherein said thioester is pentaerythritol tetrakis (B-lauryl-thiopropionate).

22. The composition of Claim 11 wherein said combination comprising said phenolic complex and said phosphite is present in an amount of from about 0.15 wt.% to about 0.6 wt.%.

23. The composition of Claim 22 wherein said combination comprising said phenolic complex and said phosphite is present in an amount of about 0.3 wt%.

24. The composition of Claim 13 wherein said thioester is present in an amount of from about .075 wt.% to about 0.3 wt.%.

25. The composition of Claim 24 wherein said thioester is present in an amount of about .15 wt.%

26. The composition of Claim 12 wherein said phenolic complex is present in an amount of from 0.003 wt.% to about 7 wt.% of the weight of said halopolymer.

27. The composition of Claim 27 wherein said phenolic complex is present in an amount of from about 0.004 wt.% to about 4.5 wt.% of the weight of said halopolymer.

28. The composition of Claim 12 wherein said phosphite is present in an amount of from about 0.003 wt.% to about 7 wt.% of the weight of said halopolymer.

29. The composition of Claim 29 wherein said phosphite is present in an amount of from about 0.0055 wt.% to about 6 wt.% of the weight of said halopolymer.

European Patent Office

# EUROPEAN SEARCH REPORT

Application Number

EP 89 11 6692

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 520 151 (D.W. CHASAR)<br>* Claims; column 1, lines 21-27; column 3, lines 6-19 * | 1-8,11 | C 08 K 5/524<br>C 08 K 5/349<br>C 08 L 57/08 |
| X | GB-A-2 027 713 (CIBA-GEIGY AG)<br>* Claims; page 2, lines 50-52; page 4, lines 8-25 * | 1-6,9, 11,12 | |
| X | GB-A-2 012 279 (CIBA-GEIGY AG)<br>* Claims; page 1, lines 46-48; page 3, lines 26,36 * | 1-6,9, 11,12 | |
| X | US-A-4 444 929 (D.W. CHASER)<br>* Claims; column 7, lines 24-27 * | 1-6 | |
| P,Y | EP-A-0 330 256 (ENICHEM SYNTHESIS S.p.A.)<br>* Claims * | 1-29 | |
| D,Y | US-A-3 745 145 (G.K. PARSIPPANY et al.)<br>* Claims * | 1-29 | TECHNICAL FIELDS SEARCHED (Int. Cl.5) |
| A | GB-A-1 380 449 (IMPERIAL CHEMICAL IND. LTD) | | C 08 K<br>C 08 L |

The present search report has been drawn up for all claims

| Place of search | Date of completion of the search | Examiner |
|---|---|---|
| THE HAGUE | 20-12-1989 | DE LOS ARCOS Y VELAZQUEZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document